(19) **Europäisches Patentamt**

**European Patent Office**

**Office européen des brevets**

(11) **EP 1 616 413 B1**

(12) **EUROPEAN PATENT SPECIFICATION**

(45) Date of publication and mention
of the grant of the patent:
**13.12.2006 Bulletin 2006/50**

(51) Int Cl.:
*H04L 12/56* (2006.01)    *H04Q 11/04* (2006.01)

(21) Application number: **04724688.9**

(22) Date of filing: **31.03.2004**

(86) International application number:
**PCT/IE2004/000051**

(87) International publication number:
**WO 2004/088937 (14.10.2004 Gazette 2004/42)**

(54) **A METHOD AND SYSTEM FOR QUALITY OF SERVICE OPTIMISATION IN A DATA NETWORK**

VERFAHREN UND SYSTEM ZUR DIENSTQUALITÄTSOPTIMIERUNG IN EINEM DATENNETZWERK

PROCEDE ET SYSTEME D'OPTIMISATION DE LA QUALITE DU SERVICE DANS UN RESEAU DE DONNEES

(84) Designated Contracting States:
**AT BE BG CH CY CZ DE DK EE ES FI FR GB GR HU IE IT LI LU MC NL PL PT RO SE SI SK TR**

(30) Priority: **31.03.2003 IE 20030235**

(43) Date of publication of application:
**18.01.2006 Bulletin 2006/03**

(73) Proprietor: **Corvil Limited**
**Dublin 2 (IE)**

(72) Inventors:
• **DAVEY, Matthew**
**Dublin 8 (IE)**
• **DOWSE, Ian Edward**
**Dun Laoghaire,**
**County Dublin (IE)**
• **MCGURK, Brian**
**Dublin 8 (IE)**
• **MEANEY, Michael**
**Knocklyon,**
**Dublin 16 (IE)**
• **O'SULLIVAN, Donald**
**Dublin 8 (IE)**
• **LEWIS, John, Trevor DI**
**deceased (IE)**

(74) Representative: **Moore, Barry et al**
**Hanna, Moore & Curley**
**13 Lower Lad Lane**
**Dublin 2 (IE)**

(56) References cited:
**EP-A- 0 932 280**        **EP-A- 1 045 555**

• **SANJEEV RAMPAL, DOUGLAS S. REEVES, IOANNIS VINIOTIS: "Dynamic Resource Allocation Based on Measured QoS" TECHNICAL REPORT TR 96-2, [Online] January 1996 (1996-01), XP002285848 North Carolina State University Retrieved from the Internet: <URL: http://rtcomm.csc.ncsu.edu/resalloc.h tm> [retrieved on 2004-06-22]**
• **ERRIN W. FULP, DOUGLAS S. REEVES: "On-line Dynamic Bandwidth Allocation" PROCEEDINGS OF THE IEEE INTERNATIONAL CONFERENCE ON NETWORK PROTOCOLS, [Online] October 1997 (1997-10), pages 134-141, XP002285849 Retrieved from the Internet: <URL: www.cs.wfu.edu/~fulp/Papers/icnp97.pd f > [retrieved on 2004-06-22]**

**Description**

The present invention relates to a method of estimating the optimum service rate at a specified quality of service for the transmission of packets of data of different characteristics through a switch node comprising a buffer having a defined size. The invention is also directed towards a system for carrying out such a method.

Traffic in a data network is essentially composed of individual transactions or flows from a source. The source generates a stream of bits grouped into packets. A complete description of the statistics of the source would be very complex. If the goal is the provisioning of sufficient resources at a router or switch in order to limit packet loss and delay at that router, then a more compact encapsulation of the statistics of traffic arriving at the router can be sufficient. We refer to any such encapsulation as a traffic descriptor. One such traffic descriptor has been described in the US Patent Specification No. 6580691 (Bjoerkman et al), namely a polygonal approximation to a scaled cumulant generating function (sCGF). This US Patent Specification discloses a method and system for estimating the sCGF on-line in real time and storing it as a compact traffic descriptor.

The terminology of this specification is that which is used in High-Performance Communication Networks [Jean Walrand and Pravin Varaiya (Second Edition) Academic Press 2000], unless clearly otherwise.

A communication network is a collection of network elements interconnected so as to support the transfer of information from a user at one network node to a user at another. The principal network elements are links and switches. A link transfers a stream of bits from one end to another at a specified rate with a given bit error rate and a fixed propagation time. In this specification, we refer to the rate in bits per second at which a buffer is served as the service capacity. Other terms often used interchangeable with service capacity are link-rate and bandwidth. Links are unidirectional. The most important links are:

- optical fibre;
- copper twisted pair;
- ethernet.

Several incoming and outgoing links meet at a switch, a device that transfers bits from its incoming links to its outgoing links. The name "switch" is used in telephony, while in computer communications, the device that performs routing is called a router, the terms are used interchangeably in this specification. When the rate of incoming bits exceeds that of outgoing bits, the excess bits are queued in a buffer at the switch. The receiver of each incoming link writes a packet of bits into its input buffer, the transmitter of each outgoing link reads from its output buffer. The switch transports packets from an input buffer to the appropriate output buffer.

The quality of a communications network service, as perceived by a user, varies greatly with the state of the network. To make packet-switched networks economically viable, it is necessary to be able to guarantee quality while reducing capital investment and operating expenses.

Degradation in the perceived quality of a service can often be traced back to loss or delay of data packets at a node or switch in the network. User satisfaction can be guaranteed by managing loss and delay of packets at those nodes where congestion can occur.

Typically, users transmit bits in bursts: active periods are interspersed with periods of inactivity. The peak rate of transmission cannot exceed the link rate. The mean rate of transmission, by definition, cannot exceed the peak rate. The ratio:

$$\frac{(peak\ rate) - (mean\ rate)}{(mean\ rate)}$$

is a measure of the burstiness of the source.

Loss and delay of data packets at a node in the network arise from the queuing of packets in the buffers of switches or routers. Buffers are required to cope with fluctuations in the bit-rate on incoming links. However, if the buffers are too small, packets will be lost as a result of buffer overflow; if the buffers are too large, some packets will experience unacceptable delays. For a given buffer-size, loss and delay can be reduced by increasing the capacity of the outgoing link.

To eliminate packet loss entirely, it would be necessary to increase the capacity of the outgoing link to equal the sum of the capacities of the incoming links. This is prohibitively expensive. Nevertheless, it is a strategy employed sometimes by network operators who take a conservative view on assuring network quality of service.

There is a better way. It is unnecessary to eliminate packet loss and unacceptable packet delay in order to give satisfactory perceived quality. It is enough to keep their frequency within predetermined bounds. These bounds are referred to as Quality of Service (QoS) targets.

The optimal way to ensure satisfactory perceived quality is to provide the minimum capacity that will guarantee the QoS targets. This minimum capacity is referred to as the Bandwidth Requirement (BWR) of the bit-stream. It lies somewhere between mean rate and the peak-rate requirement.

The existence of a BWR and its value can be demonstrated experimentally with a router by observing the change in the frequency with which a target queuing delay in an output buffer is exceeded when the capacity of the outgoing link is varied.

The mean-rate and the peak-rate doe not depend on the QoS targets. For bursty traffic, the peak-rate can be many multiples of the mean-rate. As the QoS target changes, the BWR varies between them.

For a given QoS target, the BWR depends strongly on the nature of the traffic. There is no universal multiplier than can be applied to the mean-rate or peak-rate to give the BWR for a given QoS target. The present applicants have provided various ways of measuring BWR on line in real time such as described in US Patent Specification No. 6580691 (Bjoerkman et al).

This opens the way for many applications: monitoring network quality levels, QoS-sensitive service provisioning, IP call admission control, traffic-based billing and capacity planning.

Essentially, therefore, given the buffer size b and the QoS target Q, the BWR of the communications system can be calculated from the traffic descriptor D. It will be appreciated that the traffic descriptor, which is essentially the statistical properties of the data, is all important. That descriptor must contain sufficient statistical information to allow computation of the bandwidth requirement. Thus, it is vital to choose the correct Descriptor format, definition or methodology to describe the statistical properties of the traffic. Essentially, the traffic descriptor D describes the characteristics of the particular traffic.

There are circumstances iri which the nature of the source is such that the statistics of the packet stream are independent of the service capacity available at the router in question. This is the case, for example, where the output of the source is voice traffic - digitised speech. Here, the statistics depend on the behaviour of the speaker and on the codec used to digitise the audio signals, but not on the available service capacity. In general, we refer to packet streams from sources whose statistics are independent of the available service capacity as inelastic traffic.

However, there are circumstances in which the nature of the source is such that it cannot be assumed that the statistics of the traffic stream is independent of the service capacity at the router. A feedback mechanism causes the statistics of the source to depend on the service capacity S available to its packet-stream at the buffer. One example of this is web-browsing; here the rate at which the user requests web-pages can depend on the rate at which they are received. In general, we refer to packet streams from sources whose statistics depend on the available service-capacity as elastic traffic.

US Patent Specification No. 6,266,322 B1 (AT&T Corp) which is specifically referenced in totality herein describes in some detail how elastic data traffic is handled.

Indeed this US patent specification discloses a method of dimensioning link bandwidth for elastic data traffic for a link in a communications network. However, this US patent does not disclose a method of accurately determining the minimum service rate to maintain quality of service requirements within the network. Further it does not address the problem of selecting an optimum service rate. It could be suggested that it is not as important for elastic traffic as inelastic traffic, since the former operates by feedback control to adapt to time-varying available bandwidth.

PCT Publication No. WO 01/13557 (Fujitsu Network Communications, Inc.) discloses a system for supporting multiple application traffic types over a connection network, for example, elastic and inelastic traffic. Further examples of patents in the area of handling elastic traffic in data networks are disdosed by US Patent No. 6,115,359 (Nortel Networks Corporation) and PCT Publication No. WO 01/28167 (Telefonaktiebolaget LM Ericsson). However, this patent does not teach how to address, in a fundamental way, the problems of inelastic traffic. It relates more to committing some bandwidth to the inelastic traffic by mapping the inelastic traffic to components or switches which provide bandwidth commitments. These commitments enable the data to be transferred through the switch without exceeding a predetermined delay. However, it could be suggested that it is still not accurately estimating the bandwidth requirement. It is more a question of allocating sufficient bandwidth having regard to what it has believed the traffic to be.

The fundamental problem in providing quality of service in a data network is to determine accurately the optimum service rate which is in effect the minimum service rate at which packets of data are removed from a buffer in a switch, whilst maintaining quality of service in the data network and optimising the available bandwidth in the network. Methods devised for determining this optimum service rate for inelastic traffic do not work without modification for elastic traffic because the statistical character of the traffic changes in respect to changes in the available service. In practice, data network operators use trial and error methods in setting the service rate to achieve the desired response time for delivering elastic traffic. This is costly and time consuming as it requires network operators to continually monitor the response time and reconfigure the service rate.

Representative documents describing the treatment of inelastic traffic include RAMPAL ET AL: "Dynamic Resource Allocation Based on Measured QoS" TECHNICAL REPORT TR 96-2, Jan 1996 (1996-01) and FULP et al "On-line Dynamic Bandwidth Allocation" PROCEEDINGS OF THE IEEE INTERNATIONAL Conference On Network Protocols, Oct 1997 (1997-10) pages 134-141

The present invention is directed towards providing a method of estimating the optimum service rate at a specified quality of service for the transmission of data of different characteristics through a switch having a defined size. The invention is directed towards doing this without the need for human intervention.

## Statements of Invention

Accordingly the invention provides a method according to claim 1 with advantageous embodiments detailed in the dependent claims.

A considerable advantage of the present invention is that it operates successfully without a knowledge of the precise form of the bandwidth requirement (BWR) for various service rate at a buffer of a switch. Indeed, relatively little knowledge is known. All that is required is to configure a service capacity, calculate the BWR to configure a new service capacity and keep on repeating this until the calculated rate of BWR and configured service capacity coincide. It is relatively simple and easily carried out.

In one way of carrying out the invention, the initial service capacity specified in step (a) is the previous optimum service capacity. This will lead to a quicker calculation as generally, working off a new optimum service capacity is most likely to lead to a service capacity relatively close to the previous optimum service capacity.

Ideally, the traffic is continuously monitored so that if the nature of the traffic changes, a new optimum service capacity is calculated. Further, it is envisaged that when the required target QoS changes from the target QoS initially set, the target QoS is reset and a new optimum service capacity is calculated.

It is envisaged that some or all of the various steps (a) to (g), as listed above, can be carried out in various jurisdictions, other than the step of configuring the service capacity for the transmission. Further, it will be appreciated that the method further comprises using the optimum service capacity to control the transmission of the traffic through the switch node.

In another method according to the invention, it is possible that a sample of the traffic is received with step (a), as listed above, being carried outside the jurisdiction and in which at least steps (c) to (g) are carried out within the jurisdiction. Again, it will be appreciated that the switch node may be remotely located with respect to where the method is carried out, except for the downloading of data to and from the switch node.

Further, the invention provides a closed loop control system comprising a communications network in which are interconnected:-

user end systems for the delivery and reception of data;

a switch node incorporating at least one buffer;

means to configure a service rate; and

a programmable controller having means to carry out the method of any preceding claim.

With this latter closed loop control system, the controller may be directly connected to a specific end user output source for the transmission of data to the switch node.

Further, the invention provides a computer program comprising program instructions for causing a computer to perform the method as laid out above.

In a further embodiment, the computer program comprises program instructions for causing a computer to provide the means as laid out above. Such a computer program may be embodied on a record medium, a computer memory, a read only memory or carried on an electrical signal carrier.

## Detailed Description of the Invention

The invention will be more clearly understood by the following description of an embodiment thereof given by way of example only with reference to the accompanying drawings in which:

Figs. 1 to 4 are various graphs illustrating bandwidth requirement as a function of service rate,

Fig. 5 is a flowchart illustrating the iterative process to estimate the optimum service rate, and

Fig. 6 is a hardware configuration of part of a communications system.

As stated above, for resource provisioning, it is important to know the minimum service-capacity that must be provided at a buffer in the router to ensure that a given. Quality of Service (QoS) target is met. We shall denote this rate in bit/sec, by BWR and generally refer to it as the required service capacity. The BWR depends on three factors. The first factor is the quality of service (QoS) that you require which may for example in the transmission of elastic data be described as the number of packets dropped i.e. those that have to be resent. In other words they are not accepted at a particular buffer and must be resent by the source. Typically as explained above, 1 in $10^5$ packets dropped or alternatively that 1 in $10^3$ packets are not delayed by more than 30 milliseconds are often considered acceptable.

The second factor is the size of the buffer which is preconfigured.

The third factor that effects the BWR is effectively the nature of the actual data being transmitted. This as already explained, can be described statistically and there are various methods of providing such a descriptor which relate to certain statistical properties of the data being transmitted. Accordingly therefore one can describe the bandwidth requirement as a function:

$$BWR = f(D, b, QoS)$$

where:

D - is the descriptor of the relevant statistical properties of the traffic flow.
b - buffer size
QoS - Quality of Service

For elastic traffic, the traffic descriptor is a function of the available service-capacity:

$$D = g(S)$$

The invention describes how an estimator designed to determine BWR for inelastic traffic can be used to determine the minimum service required to ensure that a given QoS target is met for elastic traffic. For a given service-capacity S, the estimator yields a value B(S) given by

$$B(S) = f(g(S), b, QoS)$$

It is observed experimentally that:

(a) B(S) is an increasing function of S

(b) For small values of S, B(S) is greater than S, indicating that the QoS target is not achieved when the service-capacity has the value S.

(c) For large values of S, B(S) is less than S, indicating that S exceeds the value required to achieve the QoS target.

It follows that the BWR for elastic traffic is that value S' of the service-capacity for which

$$S^* = B(S^*).$$

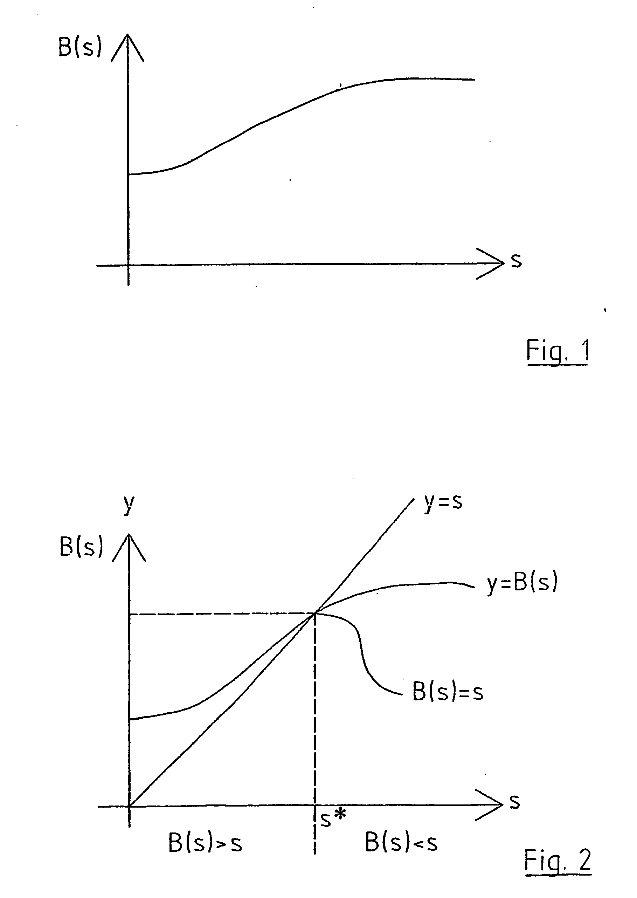

Referring now to Fig. 2, we know that for elastic traffic, the graph of B(S) against the service capacity S will be qualitatively similar to the graph drawn. The precise form of the function B(S) is not known a priori. An essential feature of this invention is that it operates successfully without this knowledge. Another essential feature is the specific point S* in Fig. 2, at which the B(S) is equal to the service capacity for that particular traffic.

It follows that, for an elastic source, the Optimum Service Rate is the unique value S* for which S=B(S). Hence any method of solving iteratively the equation S=B(S) yields a method for determining S*. In this specification, methods for solving the equation iteratively and hence determining S* are described. As mentioned above, these methods do not rely on first determining the function B(S).

It will be appreciated that to carry out the invention, it is necessary to choose a suitable type of descriptor or descriptor format for allowing the bandwidth requirement to be determined. As stated already, there are many such descriptors (D) and the more accurate and appropriate the descriptor (D) chosen or predetermined, the better will be the calculation of the BWR.

Assume the buffer size b to be known.

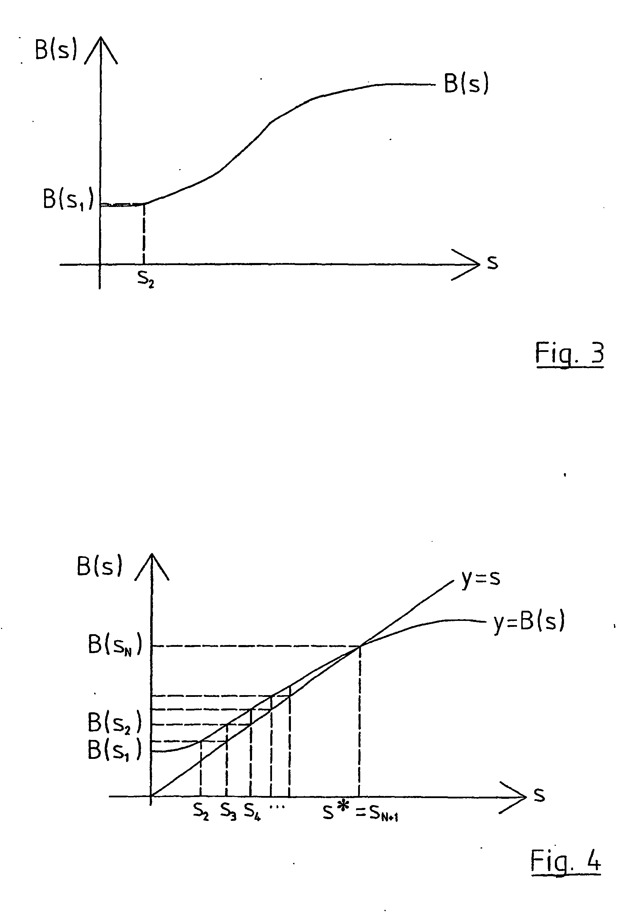

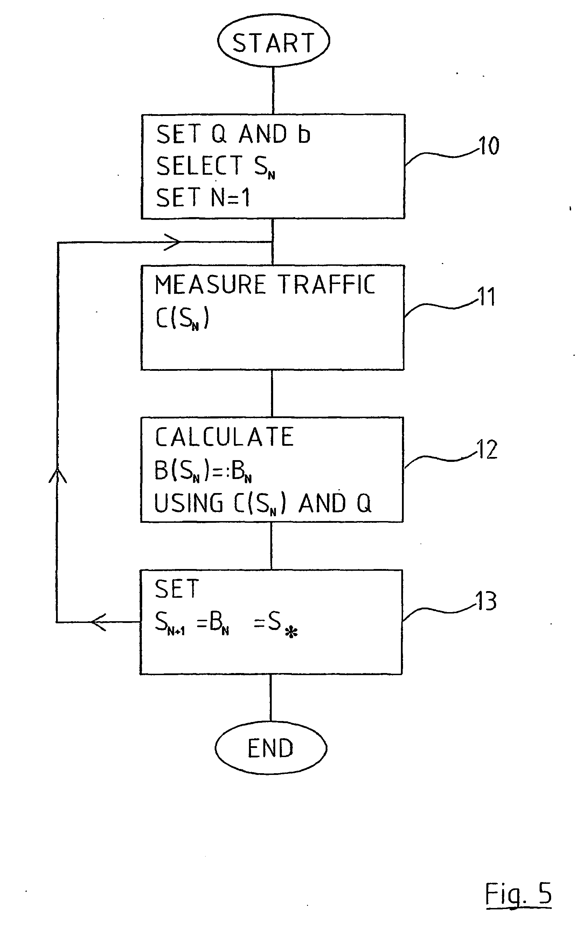

Fix the QoS target Q.
Configure the service rate at some initial value $S_1$
Estimate the traffic descriptor for the source and use it together with the values b and
Q to determine the BWR value $B_1 := B(S_1)$ see Fig. 3.
Next configure the service rate to be $S_2$ given by $S_2 = B_1$ see Fig. 4.

Re-estimating the traffic descriptor and repeating the procedure, we use the scheme:

For N= 1, 2,..............
Put $S_{N+1} = B_N$

to get a sequence $S_1, S_2,.......$
As N increases, $S_N$ converges to S*, which is the unique value of the service capacity such that

$$S^* = B(S^*).$$

It will be appreciated, by considering Fig. 2, that if $S_1 < B(S_1)$, the sequence increases to S*; if $S_1 > B(S_1)$, the sequence decreases to S*.

In practice, the service rates $S_1, S_2.....$ may be reconfigured at suitable time intervals such as for example 5 minutes. It also has to be appreciated that in many instances it will be necessary to carry out the operation indefinitely. A reason for this would be for example where the software packages or operations being run are changed. In which case, the bandwidth requirement function changes to, for example, B'(S). Now the operation has to be repeated and the new optimum service rate has to be obtained, in the sense that one now has to solve the new equation which is:

$$S = B'(S)$$
.

Referring now to the flow process of Fig. 5 which illustrates the iterative process of calculating the optimum service rate S*. In step 10, the quality of service Q is set and the size of the buffer b is determined. A service rate $S_1$ is arbitrarily selected. The traffic flowing through a buffer is measured by sampling the traffic. A traffic descriptor D is extracted from the sampled traffic which is representative of the statistical property flow of the traffic in step 11. In step 12, the BWR for that selected service rate, having a particular quality of service and a fixed buffer size, along with the traffic descriptor, provides an estimate of the required service capacity in real-time. In step 12, a new service rate is calculated from the estimated bandwidth requirement. In step 13, a check is made whether the new service rate coincides with the estimated bandwidth requirement. If they do not coincide, then steps 11 and 12 are repeated iteratively until the estimated bandwidth requirement coincides with the service rate which is the optimum service rate S*. It will be appreciated that the extent to which the BWR is required to coincide with the service capacity is determined by the network operator. In other words, the service rate S and the BWR do not have to exactly coincide, but be within a range that will maintain quality of service for the traffic flow. This process can be carried out at preset time intervals or alternatively when a change in the statistical property of the traffic flow is detected.

It will be appreciated that the invention can be carried out in many jurisdictions and that therefore it would not be unreasonable to find that certain operations are carried out in one country and more carried out another.

It is envisaged that there are many ways that the invention may be carried out by computers and similar equipment suitably programmed. Further the information and data generally supplied will allow many and varied control operations to be carried out using the invention.

Essentially what the present invention does is provide packet level quality of service on a data network where the rate at which a source emits data packets adapts to utilise all the available bandwidth. The present invention determines accurately the minimum service rate which is obviously the optimum service rate required to achieve a target level of service. For example in the remote querying of a database, the application level response time increases with an increase in packet delay caused by the queuing of packets in the buffer at a network element. As has been explained above, in order to achieve acceptable response times ways must be found to achieve a quality of service target expressed as delay constraints. Present systems do not allow this.

The present invention provides a way of directly controlling packet level quality of service. Essentially the present invention is "lightweight" and capable of being incorporated in closed loop control systems as described with reference to Fig. 4 will allow the automation of the operation and avoids manpower intensive operations now required in changing the provisioning in a system with changing traffic patterns.

As will be appreciated by any mathematician, there are many iterative schemes to calculate the optimum service rate. Most of these have a trade off between speed of conversion and computational overhead.

One of the great advantages of the present invention is that there is no need to know the actual function, but simply to carry out the calculations. Depending on the number of calculations that have to be carried out before convergence is reached, it will be appreciated that if the results were to be plotted, much more accurate knowledge would be known regarding B(S) than was known. However, this is not necessary and does not provide any great advantage to those operating the communications system.

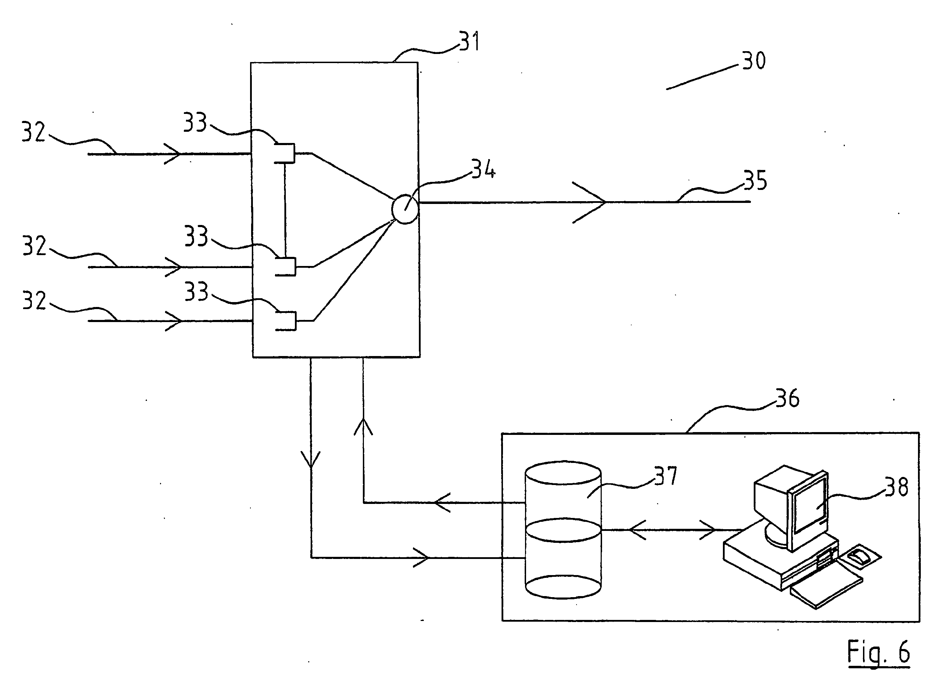

Referring now to Fig. 6, there is illustrated part of a communications network and hardware configuration for carrying out the present invention, indicated generally by the reference numeral 30. A typical router or switch 31 receives a number of links 32 for the delivery and reception of data. Each link is connected to at least one buffer 33 incorporated in the switch 31. Each buffer 33 has an associated scheduler which schedules the service rate S for each buffer. In other words, the scheduler decides for each buffer 33 the maximum rate, measured in bits per seconds, that packets of data can be forwarded or received by each buffer 33. Each buffer 33 is connected to a port 34 which in turn is connected to a larger link 35 which can receive or deliver data, depending on the application. This configuration is well known to the person skilled in the area of communication switching systems. Each buffer is allocated a particular service rate by the scheduler. The service rate is controlled by providing a closed loop control system by having a programmable controller 36 connected to the router. The controller 36 sets the service rate for each buffer 33 incorporated in the switch 31.

In operation, the closed loop control samples the data traffic flowing through the switch 31 at any particular time. The controller 36 comprises a database 37 and a computer 38. It will be appreciated that the database 37, for example a server, and computer 38 can remotely operate with each other. They do not have to be in the same jurisdiction as the switch or indeed each other. The controller 36 selects an arbitrary service rate. This can be done by a user inputting a particular service rate via the computer 38 or can be selected by the database 37. The controller 36 extracts a traffic descriptor D which is a description of the statistical properties of the traffic flow flowing through the buffer 33 at the time of the sampled traffic. The controller 36 calculates the BWR from the traffic descriptor D, the buffer size b and the required Quality of Service (QoS) for the buffer 33. The controller 36 estimates a new service rate from the calculated BWR. This is illustrated in Fig. 3 in which the calculated bandwidth requirement $B_1$ provides a new service rate $S_2$. The controller 36 iteratively carries out the above steps until the estimated bandwidth requirement and the configured service rate coincide to provide a final service rate.

This final service rate is the optimum service rate at which the buffer 33 should be served. It will be appreciated that the computer and the database can be at separate locations or indeed in separate jurisdictions, or alternatively housed on the one server, depending on the application, as long as closed loop control is achieved.

It will be appreciated that various aspects of the invention may be embodied on a computer that is running a program or program segments originating from a computer readable or usable medium, such medium including but not limited to magnetic storage media (e.g. ROMs, floppy disks, hard disks, etc.), optically readable media (e.g. CD-ROMs, DVDs, etc.) and carrier waves (e.g., transmissions over the internet). A functional program, code and code segments, used to implement the present invention can be derived by a skilled computer programmer from the description of the invention contained herein.

It will be appreciated therefore that a computerised program may be provided providing program instructions which, when loading into a computer, will constitute the means for organising and rearranging the traffic flow in accordance with the invention and that this computer program may be embodied on a record medium, a computer memory, a read only memory or carried on an electrical carrier signal.

In this specification the terms "comprise, comprises, comprised and comprising" and any variation thereof and the terms "include, includes, included and including" and any variation thereof are deemed to be totally interchangeable and should be afforded the widest interpretation possible.

This invention is in no way limited to the embodiment shown and may be varied in both construction and detail within the scope of the claims.

**Claims**

1. A method of estimating the optimum service capacity at a specified quality of service, QoS, for the transmission of packets of data traffic of different characteristics, the QoS being a measure of the number of packets dropped or delayed, the traffic being elastic traffic and being described by a predetermined type of descriptor, D, to allow the calculation of the estimated bandwidth requirement, BWR, for that traffic, through a switch node comprising a buffer having a defined size, b" comprising at time intervals, carrying out the steps of :

   (a) configuring the service-capacity;
   (b) sampling the traffic so as to measure the traffic flowing through the buffer;
   (c) extracting the descriptor, D, from the sampled traffic the descriptor being a function of the available service capacity;
   (d) calculating from the descriptor, D, the BWR for the configured service capacity, the BWR being a function of the descriptor, the buffer size and the desired QoS,;
   (e) using the calculated BWR to configure a new service capacity;
   (f) comparing the new service capacity with the configured service capacity;
   (g) if the new service capacity and the configured service capacity do not coincide defining the new service capacity as the configured service and iteratively carrying out steps (b) through (e) until the new service capacity and the configured service capacity coincide to provide a final service capacity; and
   (h) defining this final service capacity as the optimum service capacity for that elastic traffic at that buffer.

2. A method as claimed in claim 1, in which the initial service capacity specified in step (a) is the previous optimum service capacity.

3. A method as claimed in claim 1, in which the traffic is continuously monitored so that if the nature of the traffic changes, a new optimum service capacity is calculated.

4. A method as claimed in claim 1, in which when the required target QoS changes from the target QoS initially set, the target QoS is reset and a new optimum service capacity is calculated.

5. A method as claimed in claim 1, in which step (a) is carried out in another country and some or all of steps (b) to (g) are carried out in one country and the method further comprises using the optimum service capacity to control the transmission of the traffic through the switch node.

6. A method as claimed in claim 1, in which a sample of the traffic is received with step (a) being carried in one country and in which at least steps (c) to (g) are carried out in another country.

7. A method as claimed in claim 1, in which the switch node is remotely located with respect to where the method is carried out, except for the downloading of data to and from the switch node.

8. A closed loop control system comprising a communications network in which are interconnected:

   user end systems for the delivery and reception of data ;
   a switch node incorporating at least one buffer ;
   means to configure a service rate; and
   a programmable controller having means to carry out the method of any preceding claim.

9. A closed loop control system as claimed in claim 8, in which the controller is directly connected to a specific end user output source for the transmission of data to the switch node.

10. A computer program which when run on a computer is adapted to carry out the method steps of any one of claims 1 to 7.


**Patentansprüche**

1. Verfahren zum Abschätzen der optimalen Servicekapazität bei einer bestimmten Qualität des Service, QoS, für die Übertragung von Paketen eines Datenverkehrs mit unterschiedlichen Charakteristiken, wobei die QoS ein Maß der Anzahl von fallen gelassenen oder verzögerten Paketen ist und der Verkehr ein elastischer Verkehr ist und durch eine vorbestimmte Art einer Beschreibungsgröße D beschrieben wird, um den abgeschätzten Bandbreitebedarf BWR für diesen Verkehr durch einen Schaltknotenpunkt zu errechnen, welcher einen Puffer mit einer definierten Größe b aufweist und das Verfahren die Ausführung folgender Schritte in Zeitintervallen umfasst:

(a) Konfigurieren der Servicekapazität;

(b) Tasten des Verkehrs, um den Verkehrsfluss durch den Puffer zu messen;

(c) Extrahieren der Beschreibungsgröße D aus der Tastung des Verkehrs, wobei die Beschreibungsgröße eine Funktion der verfügbaren Servicekapazität ist;

(d) Errechnen des Bandbreitebedarfes BWR aus der Beschreibungsgröße D für die konfigurierte Servicekapazität, wobei BWR eine Funktion der Beschreibungsgröße, der Puffergröße und der gewünschten QoS ist.

(e) Verwenden des berechneten BWR zur Konfiguration einer neuen Servicekapazität;

(f) Vergleichen der neuen Servicekapazität mit der konfigurierten Servicekapazität;

(g) Definieren, falls die neue Servicekapazität und die konfigurierte Servicekapazität nicht zusammenfallen, der neuen Servicekapazität als die konfigurierte Servicekapazität und wiederholtes Ausführen der Schritte (b) bis (e), bis die neue Servicekapazität und die konfigurierte Servicekapazität zusammenfallen, um die endgültige Servicekapazität zu liefern; und

(h) Definieren dieser endgültigen Servicekapazität als optimale Servicekapazität für den elastischen Verkehr an dem genannten Puffer.

2. Verfahren nach Anspruch 1, bei welchem die anfängliche Servicekapazität, welche in dem Schritt (a) festgelegt wird, die vorausgehende optimale Servicekapazität ist.

3. Verfahren nach Anspruch 1, bei welchem der Verkehr ständig überwacht wird, so dass, wenn sich die Art des Verkehrs ändert, eine neue optimale Servicekapazität errechnet wird.

4. Verfahren nach Anspruch 1, bei welchem dann, wenn die gewünschte angestrebte QoS sich gegenüber der angestrebten, anfänglich eingestellten QoS ändert, die angestrebte QoS eine Rückstellung erfährt und eine neue optimale Servicekapazität errechnet wird.

5. Verfahren nach Anspruch 1, bei welchem der Schritt (a) in einem anderen Land ausgeführt wird und einige oder sämtliche der Schritte (b) bis (g) in einem Land durchgeführt werden und das Verfahren weiter die Verwendung der optimalen Servicekapazität zur Steuerung der Übertragung des Verkehrs durch den Schaltknotenpunkt umfasst.

6. Verfahren nach Anspruch 1, bei welchem eine Ertastung des Verkehrs aufgenommen wird, wobei der Schritt (a) in einem Land durchgeführt wird und bei welchem mindestens die Schritte (c) bis (g) in einem anderen Land durchgeführt werden.

7. Verfahren nach Anspruch 1, bei welchem der Schaltknotenpunkt mit Bezug auf den Ort der Ausführung des Verfahrens entfernt gelegen ist, ausgenommen bezüglich des Herunterladens von Daten nach und von dem Schaltknotenpunkt.

8. System mit geschlossener Regelschleife, welches ein Kommunikationsnetzwerk enthält, in welchem folgende Teile zusammengeschaltet sind:

Benutzerendsysteme zur Absendung und zum Empfang von Daten;

ein Schaltknotenpunkt, welcher mindestens einen Puffer enthält;

Mittel zur Konfiguration einer Servicerate; und

eine programmierbare Steuereinrichtung, welche Mittel zur Ausführung des Verfahrens nach einem der vorhergehenden Ansprüche aufweist.

9. System mit geschlossener Regelschleife nach Anspruch 8, bei welchem die Steuereinrichtung unmittelbar mit einer bestimmten Endbenutzerausgangsquelle für die Übertragung von Daten zu dem Schaltknotenpunkt verbunden ist.

10. Computerprogramm, welches beim Ablauf in einem Computer dazu ausgebildet ist, die Verfahrensschritte nach irgendeinem der Ansprüche 1-7 auszuführen.

**Revendications**

1. Procédé d'estimation de la capacité de service optimale à une qualité de service QoS spécifiée, pour la transmission de paquets de données de trafic à différentes caractéristiques, la QoS étant une mesure du nombre de paquets abandonnés ou retardés, le trafic étant un trafic fluctuant qui est décrit par un type de descripteur D prédéterminé, pour permettre le calcul de la bande passante requise estimée BWR pour ce trafic, à travers un noeud de commutation comprenant une mémoire tampon de taille définie b, méthode comprenant à certains intervalles de temps la mise en oeuvre des étapes consistant à :

    (a) configurer la capacité de service
    (b) échantillonner le trafic pour mesurer l'écoulement du trafic à travers la mémoire tampon ;
    (c) extraire le descripteur D du trafic échantillonné, le descripteur étant une fonction de la capacité de service disponible ;
    (d) calculer à partir du descripteur D la BWR pour la capacité de service configurée, la BWR étant une fonction du descripteur, de la taille de la mémoire tampon et de la QoS souhaitée ;
    (e) utiliser la BWR calculée pour définir une nouvelle capacité de service ;
    (f) comparer la nouvelle capacité de service à la capacité de service configurée ;
    (g) si la nouvelle capacité de service et la capacité de service configurée ne coïncident pas, définir la nouvelle capacité de service comme étant la capacité de service configurée puis mettre en oeuvre de manière itérative les étapes (b) à (e) jusqu'à ce que la nouvelle capacité de service et la capacité de service configurée coïncident pour fournir une capacité de service finale ; et
    (h) définir cette capacité de service finale comme étant la capacité de service optimale pour ce trafic fluctuant au niveau de la mémoire tampon considérée.

2. Procédé selon la revendication 1, dans laquelle la capacité de service initiale spécifiée à l'étape (a) est la capacité de service optimale précédente.

3. Procédé selon la revendication 1, dans laquelle le trafic est surveillé de manière continue de façon à ce que si la nature du trafic change, une nouvelle capacité de service optimale est calculée.

4. Procédé selon la revendication 1, dans laquelle lorsque la QoS cible exigée est différente de la QoS cible déterminée initialement, la QoS cible est remise à un état initial et une nouvelle capacité de service optimale est calculée.

5. Procédé selon la revendication 1, dans laquelle l'étape (a) est mise en oeuvre dans un autre pays et certaines ou toutes les étapes (b) à (g) sont mises en oeuvre dans un premier pays, le procédé consistant en outre à utiliser la capacité de service optimale pour contrôler la transmission du trafic à travers le noeud de commutation.

6. Procédé selon la revendication 1, dans lequel un échantillon du trafic est reçu alors que l'étape (a) étant mise en oeuvre dans un premier pays, et dans lequel au moins les étapes (c) à (g) sont mises en oeuvre dans un autre pays.

7. Procédé selon la revendication 1, dans lequel le noeud de commutation est distant de l'endroit où le procédé est mis en oeuvre sauf pour le téléchargement des données vers et en provenance du noeud de commutation.

8. Système de contrôle à boucle fermée comprenant un réseau de communication dans lequel sont interconnectés :

    des systèmes terminaux d'usager destinés à la distribution et à la réception de données
    un noeud de commutation incorporant au moins une mémoire tampon ;
    des moyens pour configurer un débit de service ; et
    un organe de commande programmable avec des moyens pour mettre en oeuvre le procédé selon l'une quelconque des revendications précédentes.

9. Système de contrôle à boucle fermée selon la revendication 8, dans lequel l'organe de commande est directement relié à une source de sortie spécifique de terminal d'usager pour l'émission de données vers le noeud de commutation.

10. Programme d'ordinateur qui, lorsqu'il est exécuté sur un ordinateur, est prévu pour mettre en oeuvre les étapes du procédé selon l'une quelconque des revendications 1 à 7.

B(s)

s

Fig. 1

y

B(s)

y=s

y=B(s)

B(s)=s

s*

B(s)>s

B(s)<s

s

Fig. 2

Fig. 3

Fig. 4

START

SET Q AND b
SELECT $S_N$
SET N=1 ——— 10

MEASURE TRAFFIC
$C(S_N)$ ——— 11

CALCULATE
$B(S_N)=:B_N$
USING $C(S_N)$ AND Q ——— 12

SET
$S_{N+1} = B_N = S_*$ ——— 13

END

Fig. 5

EP 1 616 413 B1

Fig. 6

14